# DEMANDE DE BREVET EUROPEEN

(11) **EP 3 489 130 A1**
(43) Date de publication de la demande: **29.05.2019**
(21) Numéro de dépôt: 18207980.6
(22) Date de dépôt: 23.11.2018
(51) Int. Cl.: B64C 1/06, E04C 3/08

(54) **POUTRE CONFIGURÉE POUR ABSORBER UNE ÉNERGIE LIBÉRÉE LORS D'UNE COLLISION**

(30) Priorité: 23.11.2017 FR 1761091
(71) Demandeur: Airbus (S.A.S.), 31700 Blagnac (FR)
(72) Inventeur: CAVALIERE, Frédérick, 78180 MONTIGNY LE BRETONNEUX (FR); GUIMARD, Jean-Mathieu, 78125 VIEILLE EGLISE EN YVELINES (FR); MESNAGE, Didier, 92210 SAINT CLOUD (FR)
(74) Mandataire: Gicquel, Olivier Yves Gérard

(57) **Abrégé**

Une poutre allongée comporte au moins une âme (31) mince et au moins une semelle interne (32) fixée à l'âme sur un bord longitudinal de l'âme.

Pour absorber une énergie par endommagement de l'âme :
- l'âme (31) comporte au moins une ouverture (35) dont un bord longitudinal de plus grande longueur (LT) est situé au voisinage de et parallèle à la semelle interne, de sorte à déterminer, dans une zone d'absorption d'énergie (30), une partie fragilisée (321) de la semelle interne ;
une pièce de compression (40) est fixée à la poutre, flottante et sans jeu significatif entre ses extrémités et des surfaces de matage (36) de l'âme (31) sur des bords de l'ouverture (35) déterminant une longueur du bord longitudinal de plus grande longueur (LT) de l'ouverture.

## Description

### DOMAINE TECHNIQUE DE L'INVENTION

La présente invention s'inscrit dans le domaine des éléments de structure. Plus particulièrement, l'invention concerne une pièce structurale configurée pour absorber l'énergie, notamment en cas de collision.

L'invention s'applique à tout domaine dans lequel il est avantageux de mettre en oeuvre au sein d'une structure un système d'absorption locale d'énergie, en particulier lors de la collision d'un mobile avec un autre corps, mobile ou fixe.

Un domaine d'application de l'invention est le secteur aéronautique, dans lequel la pièce structurale peut avantageusement être mise en oeuvre en tant que pièce participant à la résistance structurale d'un ensemble et en tant que pièce de collision pour un aéronef, c'est-à-dire une pièce structurale participant à l'absorption locale de l'énergie délivrée lors d'une collision avec le sol.

### ÉTAT DE LA TECHNIQUE

De longue date dans le domaine automobile, la question du comportement d'un véhicule en cas de choc est essentielle, notamment pour le cas des accidents de la circulation. Il convient dans ce cas de limiter l'accélération subie par l'habitacle du véhicule et ses occupants, afin de maintenir l'intégrité de l'habitacle et de garantir la sécurité des passagers.

Une technique connue consiste à absorber progressivement l'énergie cinétique du véhicule dans la déformation d'une partie des structures du véhicule adaptée pour se déformer en préservant la structure de l'habitacle.

Dans le domaine aéronautique, le problème se pose également et en particulier en cas de collision avec le sol. L'absorption d'énergie par les pièces structurales d'un fuselage d'aéronef jouera dans ce cas un rôle important en cas de collision survivable de l'aéronef avec le sol, par exemple lors d'un atterrissage d'un avion avec le train d'atterrissage totalement ou partiellement rentré. Il est donc connu de concevoir les structures inférieures du fuselage d'un aéronef pour absorber par déformation l'énergie lors d'un cas de collision avec le sol.

Dans le cas des avions ayant une structure essentiellement métallique, ce type de conception pour absorber l'énergie est aujourd'hui généralisé, facilitée par la nature ductile des métaux, en particulier des alliages d'aluminium, utilisés qui favorise l'absorption de l'énergie par déformation plastique.

La généralisation de l'usage des matériaux composites dans les aéronefs de conception récente introduit cependant une nouvelle difficulté dans le problème de l'absorption de l'énergie en cas de collision avec le sol en raison du caractère fragile de ces matériaux. Il est connu que les matériaux composites présentent généralement, au moins pour les matériaux composites performants sur le plan mécanique, un faible allongement en rupture et un domaine plastique restreint. Dans ces conditions, les capacités d'absorption d'énergie par déformation d'une telle pièce ne suffisent plus à reprendre l'énergie libérée lors d'une collision avec le sol.

Pour pallier à cette difficulté, il est connu, notamment comme décrit dans la demande de brevet internationale n° WO 2012/084727, de réaliser une pièce structurale, dans laquelle est formée une fenêtre où sont disposées des moyens de découpe du matériau de la pièce. De cette manière, lors d'une collision avec le sol, sous l'effet des efforts subis, la pièce se déforme et les bords de la fenêtre se rapprochent. Il s'en suit que le matériau de l'âme est découpées en lamelles par les moyens de découpe, ce qui est obtenu avec une importante absorption d'énergie réalisée progressivement. En ne mettant pas en oeuvre la déformation plastique de l'âme, ce dispositif est adapté aux structures en matériaux composite.

Ce dispositif présente cependant les inconvénients d'une conception et de modes de chargement mécaniques complexes, d'un encombrement et d'une masse importante, et d'un coût onéreux du fait des difficultés de mise en oeuvre opérationnelle des moyens de découpe. Un autre inconvénient est que les fonctions de résistance mécanique aux charges statiques en conditions normales d'exploitation de la pièce et les fonctions d'absorption d'énergie durant la phase de charges dynamiques (après la défaillance) sont assurées par la même pièce, ce qui contraint fortement sa conception et perturbe la maîtrise des phénomènes physiques en jeu dans cette pièce.

La présente invention vise à remédier aux inconvénients des systèmes d'absorption locale d'énergie existants, notamment à ceux exposés ci-avant, en proposant un tel système qui permette un découplage des fonctions de résistance mécanique aux charges statiques en conditions normales d'utilisation et des fonctions d'absorption d'énergie durant la phase de charges dynamiques après l'application d'une charge supérieure à une charge limite, qui garantisse que l'absorption d'énergie soit basée sur un phénomène physique prédictible et reproductible tout en restant suffisamment léger et simple réaliser et à mettre en oeuvre.

### OBJET DE L'INVENTION

A cet effet, l'invention concerne en premier lieu une poutre dont la structure est adaptée pour absorber une énergie lorsqu'elle est déformée en raison d'une collision subie par une autre structure dans laquelle elle est intégrée comme pièce structurale travaillante de cette autre structure.

La poutre de l'invention est de manière conventionnelle une poutre allongée suivant une direction tangentielle T de ladite poutre, qui comporte au moins une âme mince et au moins une semelle interne fixée à ladite âme sur un bord longitudinal de l'âme.

En outre dans la poutre de l'invention :
- l'âme comporte au moins une ouverture dont un bord longitudinal de plus grande longueur est situé au voisinage de l'au moins une semelle interne, et sensiblement parallèle à cette semelle interne suivant la direction tangentielle T, de sorte à déterminer, dans une zone d'absorption d'énergie, une partie fragilisée de l'au moins une semelle interne non fixée à l'âme, ou fixée à une portion de l'âme réduite dans le sens d'une hauteur de la poutre, suivant une direction radiale R perpendiculaire à la direction tangentielle T, et ;
- une pièce de compression est fixée à la poutre, flottante et sans jeu significatif entre des extrémités de ladite pièce de compression et des surfaces de matage de l'âme sur des bords de l'au moins une ouverture déterminant une longueur du bord longitudinal de plus grande longueur de l'ouverture.

Suivant cette agencement, lorsque la poutre est soumise à des efforts conduisant à une rupture en compression de la semelle interne de la partie fragilisée, les surfaces de matage vont venir en appui sur la pièce de compression qui va endommager l'âme en absorbant au moins une partie de l'énergie à l'origine de la rupture de la semelle interne.

La poutre de l'invention peut également comporter toutes ou parties des caractéristiques suivantes pour autant qu'elles soient combinables dans une même poutre :
- la partie fragilisée est déterminée pour obtenir une rupture en compression de ladite partie fragilisée pour une valeur prédéfinie d'un effort de compression de la semelle interne dans ladite partie fragilisée, ou pour une valeur prédéfinie d'un effort de flexion de la poutre dans la zone d'absorption d'énergie produisant un effort de compression de la semelle interne. De cette manière, tant que la semelle interne de la partie fragilisée n'a pas rompu, c'est-à-dire que les efforts subit par la poutre n'ont pas dépassé le seuil prédéfini qui est choisi supérieur aux efforts en condition normale d'utilisation, la poutre reprend les efforts auxquels elle est soumise sans interférence avec la pièce de compression, ce qui facilite le calcul de la poutre dont la structure soumise aux efforts des conditions normales d'utilisation travaille sans interaction avec la pièce de compression qui n'est pas sollicitée dans ces conditions normales. ;
- le matériau de la pièce de compression est choisi en fonction du matériau de l'âme pour endommager ladite âme au niveau des surfaces de matage lorsque les surfaces de matage s'appuient sur ladite pièce de compression suite à une rupture en compression de la partie fragilisée ;
- un renfort est agencé pour modifier localement des caractéristiques mécaniques en compression de la partie fragilisée sur une partie d'une longueur de ladite partie fragilisée ;
- une zone d'absorption d'énergie est agencée à proximité d'une zone d'introduction d'effort apte à former un point d'appui de la poutre favorisant une formation des efforts de compression dans la partie fragilisée lors d'une déformation de la poutre donnant naissance à des forces de compression de la semelle interne ;
- la partie fragilisée est conçue pour rompre en compression par fracture ou par flambage ou par délamination ;
- un remplissage d'un matériau souple, tel qu'une mousse ou un élastomère, est intercalé entre la pièce de compression et la partie fragilisée ;
- l'au moins une ouverture présente une forme globalement triangulaire dont un sommet opposé au bord longitudinal de plus grande longueur détermine une hauteur de ladite ouverture suivant la direction radiale R ;
- la pièce de compression a sensiblement la forme d'un tronc de cylindre creux traversé, suivant un axe dudit cylindre creux, par la partie fragilisée ;
- une structure du tronc de cylindre creux est formée d'une seule pièce, fendue suivant sa longueur et maintenue fermée par au moins une fixation ;
- une structure du tronc de cylindre creux est formée d'au moins deux pièces, maintenues assemblées entre elles par des fixations suivant la longueur dudit tronc de cylindre ;
- la pièce de compression a sensiblement la forme d'un tronc de cylindre ouvert avec une section en forme de U, une partie au moins de la partie fragilisée étant engagée dans l'ouverture dudit tronc de cylindre ouvert en U ;
- la pièce de compression est fixée à au moins une excroissance de la partie fragilisée se projetant depuis le bord de plus grande longueur de l'ouverture, ou depuis un autre bord de l'ouverture ;
- la pièce de compression est fixée à la poutre maintenue par au moins une excroissance de la pièce de compression qui s'appuie sur un autre bord de l'ouverture que le bord longitudinal de plus grande longueur ;
- la pièce de compression comporte à ses extrémités des échancrures dans lesquelles est engagée l'âme lorsque les surfaces de matage sont rapprochées l'une de l'autre ;
- au moins l'âme est réalisée en tout ou partie dans un matériau métallique, au moins dans la zone d'absorption d'énergie ;
- au moins l'âme est réalisée en tout ou partie dans un matériau composite comportant des fibres maintenues dans une matrice organique, au moins dans la zone d'absorption d'énergie ;
- la poutre est cintrée ;
- la poutre constitue un cadre ou une partie de cadre destinée à une structure de fuselage d'aéronef.

L'invention concerne également un dispositif comportant au moins une poutre, telle que la poutre de l'invention, agencée dans le dispositif en un emplacement susceptible d'être soumis à une déformation conséquente à une collision avec un objet mobile ou fixe.

Dans une forme de réalisation, le dispositif est un véhicule.

Dans une forme de réalisation, plus particulièrement le véhicule est un aéronef dans lequel une ou plusieurs poutres de l'invention sont agencées pour absorber une énergie dans le cas d'une collision avec le sol.

### BREVE DESCRIPTION DES FIGURES

D'autres avantages, buts et caractéristiques de la présente invention ressortiront de la description qui va suivre d'exemples de réalisation, dans un but d'illustration et nullement limitatif en regard des dessins annexés, dans lesquels :
- la figure 1 montre en perspective une vue d'ensemble d'un avion civil de transport de passagers, de forme conventionnelle pour lequel il est connu le problème d'absorber l'énergie en cas de collision avec le sol ;
- la figure 2 illustre schématiquement une section suivant le plan P de la figure 1 du fuselage d'un avion tel que l'avion de la figure 1 au niveau d'un cadre constitutif d'une poutre selon l'invention ;
- la figure 3 et la figure 4 illustrent, vues en perspective, un détail du cadre de fuselage de la figure 2 au niveau d'une zone d'absorption d'énergie selon un premier mode de réalisation de l'invention mettant en oeuvre une pièce de compression, présente sur la figure 3 et absente sur la vue de la figure 4 pour visualiser la structure du cadre ;
- la figure 5 illustre, suivant une vue en perspective, un détail en coupe du cadre de fuselage de la figure 3, vue en coupe au niveau d'une zone d'absorption d'énergie comportant la pièce de compression selon le mode de réalisation de l'invention illustré sur la figure 3 ;
- la figure 6 est une représentation schématique simplifiée, en vue isométrique partielle, d'une zone d'absorption d'énergie d'une poutre suivant les principes de l'invention et une ouverture de laquelle est agencé une pièce de compression ;
- la figure 7 présente en vue isométrique une vue de détail de la poutre et de la pièce de compression illustrées à la figure 6 dans une zone de matage entre la poutre et la pièce de compression ;
- les figures 8 à 11 illustrent en vue isométrique d'autres modes de réalisation selon l'invention mettant en oeuvre des formes différentes de pièces de compression à titre d'exemple ;
- la figure 12 et la figure 13 illustrent en vues isométriques d'exemples de formes différentes de réalisation de la pièce de compression d'une poutre selon l'invention ;
- la figure 14 et la figure 15 présentent en section des exemples de formes de réalisation d'une pièce de compression installée sur la poutre selon l'invention.
On note que les figures ne sont pas représentées à la même échelle et que sur une même figure, les différents éléments représentés ne sont pas nécessairement à la même échelle.
Sur les différents dessins, des pièces similaires, assurant les mêmes fonctions, sont désignées par le même numéro repère, même si elles sont de formes différentes.

### DESCRIPTION DETAILLÉE D'EXEMPLES DE RÉALISATION DE L'INVENTION

L'invention concerne une pièce structurale, c'est-à-dire une pièce destinée à supporter en service des efforts d'un même ordre de grandeur, en général à un coefficient de sécurité près, que des efforts maximaux que la pièce est en mesure de supporter avant l'apparition dans ladite pièce structurale de désordres irréversibles non acceptables, ladite pièce structurale étant configurée pour dissiper l'énergie délivrée lorsqu'elle est soumise une sollicitation en flexion supérieure à une sollicitation maximale prédéfinie, en particulier lorsque ladite sollicitation résulte d'une accélération intense résultant d'une collision d'un véhicule dans lequel est intégré ladite pièce structurale.

Dans le mode de réalisation principal décrit de manière détaillée, la pièce structurale de l'invention est une pièce d'un aéronef, par exemple un avion, ou un hélicoptère, ou un dirigeable, ou un drone. Ces exemples ne sont cependant pas limitatifs et une pièce structurale de l'invention peut être incorporée dans la structure de tout type de véhicule, voire de structures statiques pouvant être soumises au choc d'un mobile.

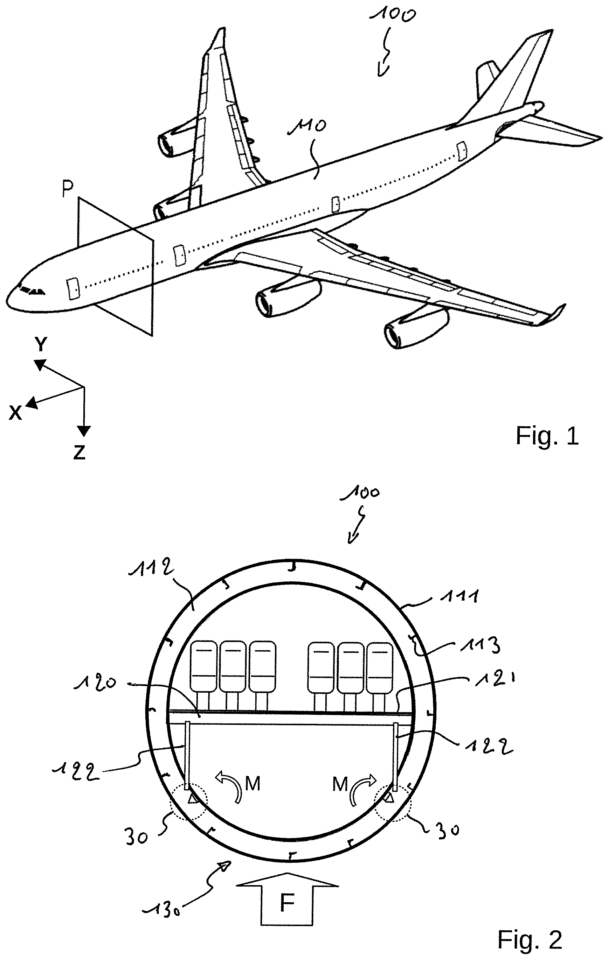

Dans les exemples de réalisation décrits, il sera considéré l'application au cas d'un avion 100, tel que l'avion illustré à titre d'exemple sur la figure 1, typique d'un avion civil de transport de passagers d'architecture conventionnelle.

A toutes fins utiles, il est définit un repère avion (X, Y, Z), dans lequel un axe X détermine un axe longitudinal de l'avion, dans un plan vertical de symétrie d'ensemble de l'avion, sensiblement confondu avec un axe longitudinal du fuselage et orienté positivement vers l'avant de l'avion, un axe Z, perpendiculaire à l'axe X, dans le plan de symétrie verticale d'ensemble de l'avion et orienté positivement vers le bas de l'avion, et un axe Y perpendiculaire aux deux axes X et Z, donc dans un plan sensiblement horizontal et orienté positivement vers la droite de l'avion.

L'avion 100 comporte un fuselage 110. Le fuselage 110 est réalisé, suivant une architecture ici conventionnelle, avec une structure du type coque raidie, dans le cas illustré de forme sensiblement cylindrique sur une partie de sa longueur, les génératrices dudit cylindre étant sensiblement parallèles à l'axe longitudinal X

La figure 2 illustre une section du fuselage 110 de l'avion 100 suivant un plan P dans un plan YZ. La structure du fuselage, ici de section sensiblement circulaire, comporte notamment un revêtement extérieur de fuselage, ou peau 111, généralement de faible épaisseur en regard des dimensions de la section de fuselage. La peau 111 s'appuie sur des poutres cintrées formant des cadres 112 de fuselage et donnant audit fuselage la forme de sa section. Sur la section de la figure 2 un seul cadre est représenté, la structure du fuselage comportant une pluralité de cadres plus ou moins espacés suivant une longueur dudit fuselage.

Entre les cadres 112, le revêtement extérieur est stabilisé par des raidisseurs longitudinaux 113 orientés sensiblement suivant la direction de l'axe longitudinal X.

Le fuselage 110 comporte également un plancher 121, dans l'exemple illustré un plancher de cabine passagers sur lequel sont fixés des sièges.

De manière conventionnelle, le plancher 121 est soutenu au niveau du cadre 112 par une traverse 120 dont des extrémités sont fixées audit cadre.

Egalement de manière connue, la fixation de la traverse 120 et du cadre 112 est complétée par des bielles 122 structurales, travaillant essentiellement en compression, chaque bielle étant fixée à la traverse 120 à une extrémité supérieure de ladite bielle et fixée au cadre 112 à une extrémité inférieure de ladite bielle pour transmettre des efforts du plancher vers le cadre correspondant.

Dans le cas illustré sur la figure 2, seulement deux bielles 122 sont mises en oeuvre de sorte qu'un volume sous le plancher 121 peut être aménagé en soute pour une charge utile. Les bielles 122 sont agencées, dans cet exemple de réalisation, sensiblement verticales.

Il sera noté ici que dans le cas d'une collision du fuselage avec le sol, par exemple dans un atterrissage forcé avec le train d'atterrissage rentré, une partie inférieure 130 du fuselage va percuter le sol avec la vitesse verticale de l'avion à l'impact et que les forces d'inertie vont solliciter la structure en compression entre ladite partie inférieure du fuselage et le plancher 121 qui supporte une masse de la cabine dont les passagers.

Sous l'effet de ces forces, les bielles 122 seront sollicitées en compression et la partie du cadre 112 la plus basse sera repoussée vers le haut.

Ces efforts introduits dans la structure du fuselage 110 lors d'un impact de l'avion avec le sol sont en particulier ceux qui conduisent à des déformations plastiques des structures métalliques exploitées pour absorber une partie de l'énergie de l'impact de manière connue.

Dans la suite de la description, il sera fait référence à une partie externe d'un élément de structure, par exemple une semelle d'un cadre, pour désigner une partie préférentiellement située du côté de la peau 111 du fuselage 110, par opposition à une partie interne pour désigner une partie préférentiellement située du côté d'un centre de la section de fuselage considérée, le centre du cercle pour un fuselage de section circulaire.

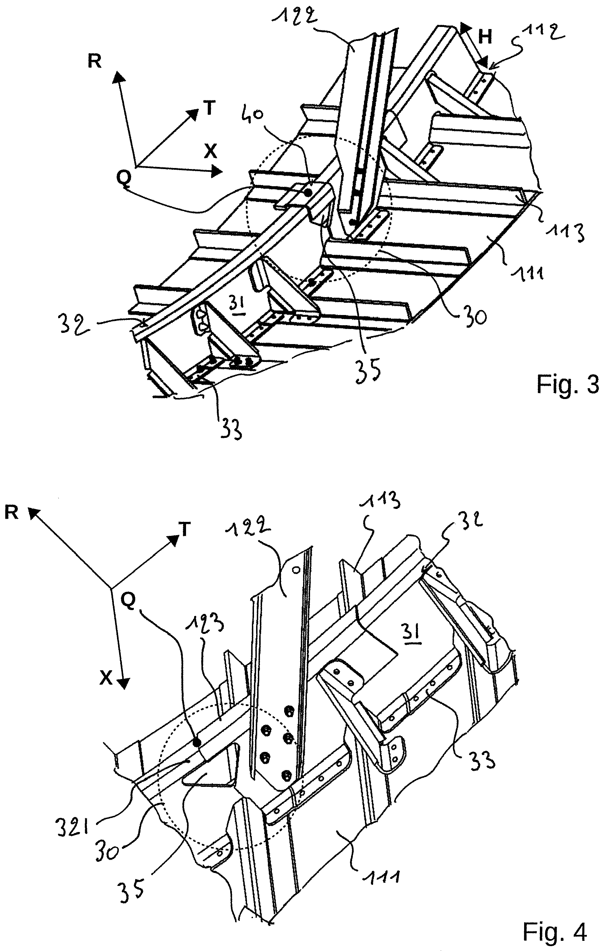

La figure 3 illustre en perspective des détails d'une zone de jonction entre une bielle 122 de compression et le cadre 112.

De manière connue, le cadre 112 est une poutre comportant une âme 31, ici dans un plan radial dudit cadre, une semelle interne 32, située sur un bord de ladite âme du côté de l'axe du fuselage, et une semelle externe 33 située sur un bord opposé de ladite âme, sur laquelle semelle externe vient s'appuyer la peau 111 et à laquelle sont fixés les raidisseurs 113.

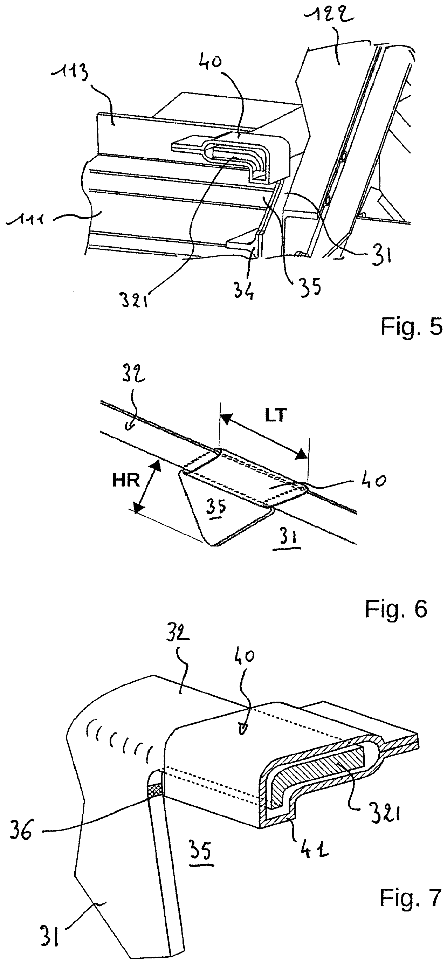

En outre, dans cette première forme de réalisation décrite, le cadre 112 comporte une semelle intermédiaire 34, visible sur la coupe de la figure 5.

Cet agencement de la section du cadre est connu pour apporter résistance, rigidité et relative légèreté à la poutre formée en raison de l'inertie de la section obtenue.

La poutre est par exemple réalisée principalement en matériau composite comportant des fibres longues maintenues dans une matrice organique dure. Les structures réalisées avec de tels matériaux sont d'autant plus résistantes que les fibres mises en jeu sont des fibres à haut module, par exemple des fibres de carbone, mais sont également, par leurs faibles déformations avant rupture, moins propices à l'absorption d'énergie par déformation lors d'un impact.

Dans la suite de la description, compte tenu de la courbure du cadre 112, il sera considéré un repère local (X,T, R) en un point Q quelconque dudit cadre. Dans ce repère local l'axe X est parallèle à l'axe X du repère avion, l'axe T est orienté suivant une direction d'une tangente à la courbure locale du cadre au point considéré et l'axe R est orienté suivant une direction radiale normale à cette tangente. Par simplification, il sera considéré qu'un plan déterminé par les directions T et R est normal à la direction X. Cette hypothèse simplificatrice correspond au cas illustré d'un plan moyen du cadre perpendiculaire à l'axe X, mais l'Homme du Métier transposera sans difficulté les principes de la solution décrite au cas d'une géométrie plus complexe de la zone considérée.

Comme visible sur les figures 3 et 4, le cadre comporte une zone d'absorption d'énergie 30 qui se caractérise par une ouverture 35 aménagée dans l'âme 31 du cadre 112, l'ouverture correspondant à une absence d'âme, et par une pièce de compression 40 dont une partie traverse ladite ouverture. Dans la suite de la description, une Zone d'Absorption d'Energie sera désignée par commodité au moyen de son acronyme ZAE.

Comme le montre en particulier la figure 4, sur laquelle la pièce de compression n'est pas représentée, et la figure 6, l'ouverture 35 présente une plus grande largeur LT, suivant la direction tangentielle T, située à proximité de la semelle interne 32, c'est-à-dire comme il sera précisé ultérieurement dans une description du fonctionnement de l'invention, dans une zone du cadre 112 qui est soumise à des efforts de compression lorsqu'une énergie consécutive à une collision avec le sol doit être absorbée.

L'ouverture 35 présente également une hauteur HR suivant la direction radiale R, donc depuis la semelle interne 32 en direction de la semelle externe 33.

Dans la forme de réalisation illustrée sur les figures 3, 4 et 6, l'ouverture 35 présente une forme sensiblement de triangle aux sommets arrondis, dont l'un des côtés, sensiblement parallèle à l'axe tangent T, correspond à la plus grande largeur LT de ladite ouverture.

La présence de l'ouverture 35 forme dans la ZAE une zone fragilisée 321 du cadre, en particulier fragilisée vis-à-vis de la résistance au flambage de la semelle interne qui ne bénéficie plus dans cette zone de la rigidité apportée par l'âme.

La pièce de compression 40 est solidarisée au cadre 112, plus particulièrement positionnée du côté de la semelle interne 32 dans la ZAE. En outre, la pièce de compression 40 comporte un voile 41 traversant l'ouverture 35 à l'emplacement de plus grande largeur LT de ladite ouverture et de sorte que ladite pièce de compression est fixée flottante et sans jeu significatif dans la direction tangentielle T au cadre 112.

Par flottante et sans jeu significatif, il doit être compris qu'une dimension du voile 41 suivant la direction tangentielle T à l'emplacement de l'ouverture 35 est sensiblement égale par valeur inférieure à la plus grande longueur LT de ladite ouverture.

En pratique, une condition à respecter et qui sera mieux comprise à la description qui sera faite du fonctionnement de l'invention, est que le voile 41 ne soit pas mis en contrainte par des déformations du cadre 112 susceptibles de se produire dans les conditions normales d'utilisation de l'avion et que, a contrario, des bords opposés dudit voile se trouvent en appui sur des surfaces de matage 36 des bords de l'ouverture 3, aux extrémités du bord de ladite ouverture correspondant à sa plus grande longueur, lorsque le cadre est déformé au-delà de valeur normales en utilisation consécutives à un impact dans la zone inférieure du fuselage.

Les emplacements des surfaces de matage 36, au niveau des extrémités du bord de plus grande longueur LT de l'ouverture 35, sont illustrés notamment sur les figures 6 et 7.

Dans la forme de réalisation illustrée sur les figures 3, 4, 6 et 7, les surfaces de matages 36 sont situées sur l'âme 31 à proximité de deux sommets du triangle formé par l'ouverture 3 aux extrémités du bord longitudinal dudit triangle, c'est-à-dire du bord sensiblement parallèle à la direction de l'axe T.

Dans la forme de réalisation des figures 3 et 4, la pièce de compression 40 est de forme sensiblement cylindrique creuse, la partie creuse du cylindre étant traversée par la semelle interne 32 du cadre.

La figure 5 présente une section de la ZAE 30 dans un plan axial (T, R) mettant en évidence la forme cylindrique de la pièce de compression 40.

Comme il ressort de cette section, la partie creuse n'est pas nécessairement ajustée à la section de la partie du cadre 112 qui la traverse, le montage flottant étant ainsi préservé.

Avantageusement, tout ou partie de l'espace de la partie creuse située entre le cadre et une paroi de la pièce de compression 40 est occupé par un remplissage 42 d'un matériau à faible rigidité, par exemple une mousse polymère ou un élastomère, pour éviter le frottement de la pièce de compression 40 sur le cadre 112, sous l'effet des vibrations notamment, sans nuire à la mobilité relative de ladite pièce de compression lorsqu'elle est sollicité dans le cas d'une déformation dudit cadre.

Dans une forme de réalisation, la pièce de compression 40, pour sa partie travaillante, est fabriquée en un matériau métallique, voire dans un autre matériau résistant, qui sera choisi pour endommager l'âme 31 du cadre sans que ladite pièce de compression ne soit déformée ni endommagée sensiblement dans les conditions où elle participera à l'absorption d'énergie.

L'invention sera mieux comprise à la description des phénomènes physiques mis en jeu lorsque la structure du fuselage 110 est soumise à un impact avec le sol dans la partie inférieure 130 dudit fuselage.

Dans certaines situations heureusement exceptionnelle, par exemple un atterrissage forcé train rentré d'un avion, le fuselage 110 entre en collision avec le sol, la partie inférieure 130 dudit fuselage étant alors la première sollicitée.

Cette collision produit dans la structure du fuselage des efforts exceptionnels qui vont dans la plupart des cas entraîner des dommages irréversibles dans la structure du fuselage. Ces dommages irréversibles sont associés à des déformations de parties de la structure du fuselage qui sont mises à profit pour absorber une partie de l'énergie à l'impact et diminuer autant que possible les accélérations subies au niveau de la cabine par les occupants de l'avion.

Considérant en particulier la figure 2 et l'exemple de réalisation décrit, il est dans l'invention mis en oeuvre des moyens pour déclencher une rupture programmée du cadre 112 de fuselage et activer par cette rupture le fonctionnement de la pièce de compression 40.

En utilisation ordinaire de l'avion 100, ce dernier est soumis à divers efforts pour lesquels les déformations des structures dudit avion sont généralement limitées au domaine élastique des matériaux mis en oeuvre et de relativement faibles amplitudes pour préserver l'intégrité des structures.

Dans cette utilisation ordinaire, une pièce de compression 40, fixée sur un cadre 112 dans une ZAE 30 dudit cadre, n'est pas sollicitée en compression en raison du jeu minimum prévu dans les zones des surfaces de matage 36.

Il est noté ici que la présence de l'ouverture 35 formée dans l'âme 31 du cadre 112 est prise en compte dans le calcul du cadre considérant l'ensemble des efforts qu'il doit subir lors de cette utilisation ordinaire pendant la vie de l'avion. L'ouverture 35, prise en compte dans le dimensionnement du cadre, n'a donc pas d'incidence sur la tenue du cadre en exploitation ordinaire de l'avion, et la pièce de compression 40 flottante est également sans effet sur la résistance du cadre dans ces mêmes conditions.

Lors d'une collision avec le sol, le fuselage subit dans sa partie inférieure une force F orientée vers le haut dont l'intensité dépasse, en général, les limites acceptable pour la structure du fuselage.

Cette force, compte tenu de déformations initiées lors de la collision, va générer un moment de flexion M dans le cadre qui, dans le cas de la structure schématisée sur la figure 2, sera maximum sensiblement au niveau de l'encastrement formé par la liaison entre le cadre 112 et la bielle plancher 122, pour ne considérer qu'un seul côté de l'avion, l'agencement étant cependant symétrique et les effets d'une collision telle que celle considérée étant globalement symétrique.

En raison de ce moment de flexion, la semelle interne 32 est sollicitée en compression ce qui va entraîner, en raison de l'intensité des forces mises en jeux, la rupture en compression de ladite semelle interne dans la ZAE, d'une part en raison de la zone affaiblie de l'âme créée par l'ouverture 3 et d'autre part en ce qu'il est avantageusement localisé la ZAE 30 dans une zone d'intensité maximale du moment de flexion en cas de collision avec le sol, dans le cas illustré a proximité de la zone l'encastrement formée à la jonction du cadre 112 et de la bielle 122.

La rupture en compression de la semelle interne est par exemple un flambage, ou encore une délamination, ou encore une fracture, le faciès de cette rupture dépendant du matériau dans lequel est réalisée l'âme.

Dans tous les cas, cette rupture en compression se poursuit par un rapprochement des surfaces de matage 36 du fait de la déformation du cadre qui tend à se plier en utilisant la semelle externe 33, et la partie de l'âme 31 restant dans la ZAE entre l'ouverture 3 et ladite semelle externe, comme une zone de charnière.

Les surfaces de matage 36 de l'ouverture 35 viennent alors en appui sur des extrémités de la pièce de compression 40 dont la rigidité et la dureté sont telles que l'âme 31 est endommagée mécaniquement, par exemple par matage ou par découpage, au fur et à mesure que le cadre 112 est déformé sous l'effet de l'énergie absorbée de la collision avec le sol.

L'endommagement de l'âme 31, du fait de l'énergie absorbée, a pour effet de réduire les accélérations pouvant être importantes associées à la collision, y compris lorsque le cadre est réalisé principalement dans un matériau peu déformable tel qu'un matériau composite.

Pour des raisons évidentes, il est agencé de préférence au moins deux ZAE 30 sensiblement symétriquement sur un cadre, comme dans l'exemple schématisé sur la figure 2.

Toutefois, le nombre de ZAE de chaque côté du plan vertical longitudinal de symétrie de l'avion n'est pas limité.

Il doit être noté que les conditions de déclenchement d'une ZAE, c'est-à-dire l'intensité de la force pour déclencher la rupture en compression de la partie du cadre traversant la pièce de compression, peuvent être maîtrisées, notamment par calculs, simulations et ou essais, et qu'il peut être agencé des ZAE montées « en série » sur un cadre, et qui sont calculées pour se déclencher successivement en cas de collision avec le sol de l'avion, pour qu'une courbe d'absorption d'énergie suive un profil d'accélération particulier, par exemple un plateau pour écrêter un pic d'accélération.

Un des bénéfices de l'invention est de séparer, dans la ZAE, la fonction de résistance en conditions ordinaires d'utilisation de l'avion aux charges statique ou non, qui permet d'assurer un dimensionnement adapté et précis du cadre, y compris dans ladite ZAE, sans contrainte liée à l'absorption d'énergie, et la fonction absorption d"énergie en cas de collision, en particulier dans le cas d'une structure comportant des pièces structurales en matériau composite.

Cette configuration se distingue des solutions connues qui mettent en oeuvre des pièces ou parties de pièces dans lesquelles un même élément assure les deux fonctions de résistance aux efforts normaux et d'absorption de l'énergie pour les efforts anormaux, ce qui en rend la conception complexe en particulier en regard des problèmes de sécurité en service.

Au contraire dans l'invention, la séparation des fonctions permet de réaliser un dimensionnement précis de la pièce pour chacune des fonctions, au profit de sa masse, de sa simplicité et de sa sûreté, tant dans sa tenue aux efforts normaux que dans la précision du comportement aux charges anormales.

L'invention telle que décrite précédemment est susceptible d'améliorations ou de variantes sans en modifier les principes essentiels.

Par exemple, dans la forme de réalisation illustrée sur les figures 3, 4 et 5, un renfort 123 est fixé sur le cadre 112. Le renfort s'étend, au moins pour partie, dans la ZAE 30 de manière à renforcer localement au moins la semelle interne 32 sur une partie de son étendue longitudinale le long de la partie creuse 35 de la pièce de compression 40. Dans le cas présent tel qu'illustré, le renfort 123 est également mis en oeuvre comme renfort de bielle, afin d'assurer une meilleure introduction des efforts de la bielle 122 vers le cadre 112,

Il résulte de cet agencement que la partie de la semelle interne 32 non renforcée et la partie de ladite semelle interne renforcée n'ont pas le même comportement en compression ce qui permet, lorsque la ZAE est sollicitée en cas de collision, de provoquer un amorçage de la rupture de la semelle interne près de l'emplacement où est arrêté le renfort.

Avantageusement, lorsque cette amélioration est mise en oeuvre, la forme du renfort 123 et ou de la pièce de compression 40 sont adaptées pour maintenir, lors d'une collision, un équilibre entre des pressions de matage à chacune des extrémités de ladite pièce de compression de sorte à bénéficier de l'absorption d'énergie par le matage réalisé aux dites extrémités.

La pièce de compression 40 décrite suivant la forme de réalisation illustrée sur les figures 3 et 4 présente en vue en bout ou en section, comme sur la vue de la figure 5, la forme d'une boucle, enveloppant la semelle interne 32 et éventuellement une partie d'âme 31 du cadre restant attaché à ladite semelle interne dans la zone de l'ouverture 35, maintenue fermée par des fixations (non représentées). Suivant cette forme la pièce de compression 40 est ouverte, dans le domaine élastique et ou plastique du matériau constituant ladite pièce de compression, pour être mise en place puis refermée pour être maintenue par les fixations.

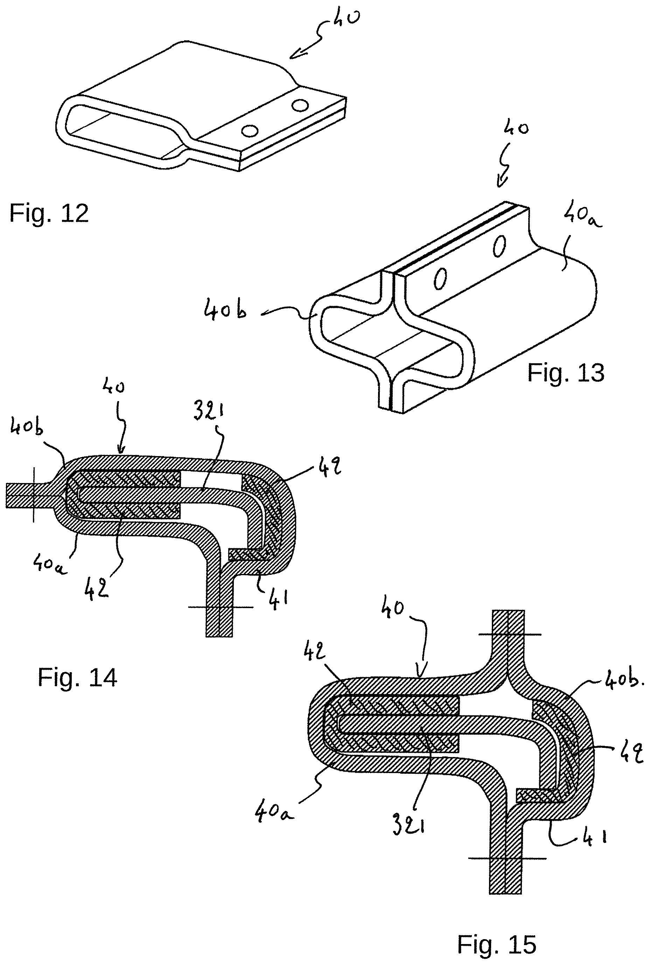

La forme de la section dans un plan radial de la pièce de compression 40 peut être différente de sorte à être adaptée à la configuration du cadre 112 et de l'ouverture 35. Par exemple la forme illustrée sur la figure 12 correspond au cas d'une ouverture 35 dont le bord longitudinal est situé sensiblement contre la semelle interne 32.

Dans d'autres formes de réalisation de la pièce de compression 40, ladite pièce de compression est réalisée en au moins deux parties séparables assemblées par des fixations après avoir été placée autour de la semelle interne 32. Ce type de formes de réalisation, dont des exemples sont illustrés sur les figures 13, 14 et 15, permet de mettre en place la pièce de compression 40 sans besoin de déformer ladite pièce de compression ce qui est avantageux lorsque ladite pièce de compression est relativement rigide.

En outre, comme illustré sur les sections des figures 14 et 15, le montage de la pièce de compression avec un remplissage 42 d'un matériau à faible rigidité, tel qu'un élastomère ou une mousse, est facilité par cet agencement en plusieurs parties assemblées, que le remplissage soit posé lors de la pose de la pièce de compression, ou qu'il soit fixé préalablement à pièce de compression ou au cadre.

Pour d'autres environnements, l'invention peut être mise en oeuvre dans n'importe quel domaine où des pièces structurales configurées pour dissiper l'énergie délivrée lors d'une collision peuvent être mises en oeuvre. L'invention peut être mise en oeuvre dans d'autres aéronefs qu'un avion, comme un hélicoptère, un dirigeable, ou autre. Le domaine aéronautique n'est pas limitatif. L'invention peut être mise en oeuvre notamment dans le domaine automobile. L'invention peut être mise en oeuvre dans d'autres pièces structurales qu'un cadre, toute pièce structurale dont une partie peut être mise en compression lors d'une sollicitation avec une énergie anormalement élevée pouvant être adaptée suivant les principes de l'invention, en fonction de la forme de ladite poutre ou en fonction de son intégration au sein de la structure générale.

Dans d'autres formes de réalisation, le renfort 123 décrit plus haut peut résulter d'une surépaisseur du cadre 112 formée à l'emplacement souhaité lors de la réalisation dudit cadre, ou de modifications de caractéristiques structurales par exemple par un agencement différent des fibres du matériau composite constituant ledit cadre à l'emplacement souhaité.

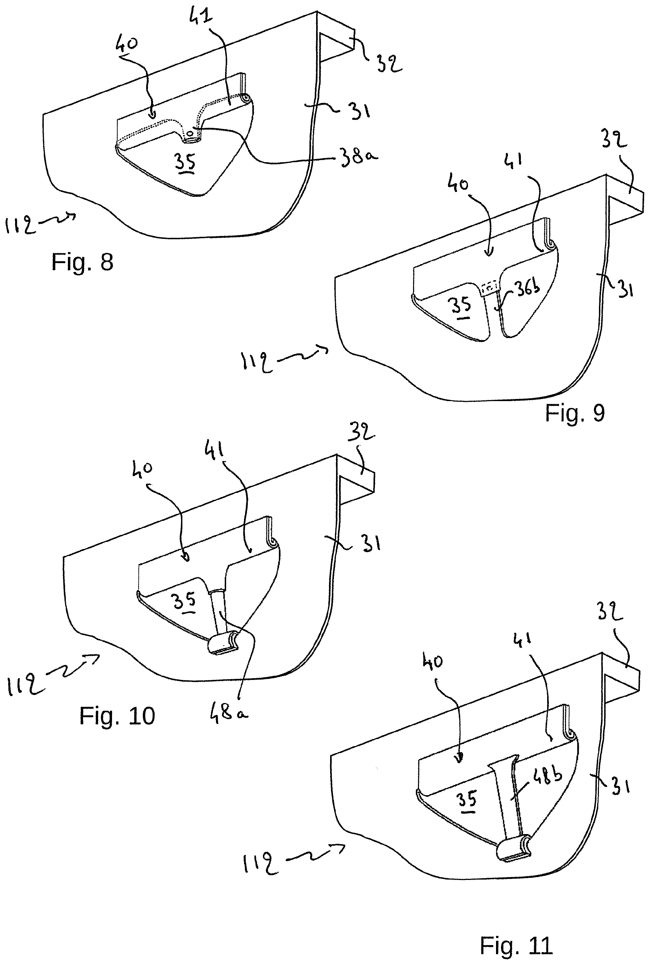

Dans des variantes de réalisation, dont des exemples sont illustrés sur les figures 8 à 11, la pièce de compression 40 présente une section ouverte en forme de U par une ouverture duquel U ladite pièce de compression est engagée sur le bord de plus grande longueur LT de l'ouverture 35.

Dans ces variantes de réalisation il convient de fixer la pièce de compression 40 au cadre 112 par des moyens spécifiques pour maintenir ladite pièce de compression dans la position qu'elle doit conserver jusqu'à son fonctionnement éventuel dans un cas de collision avec le sol pour son application au cas d'un avion.

Dans une forme de réalisation, la pièce de compression 40 est fixée sur une ou plusieurs excroissances du cadre qui se projettent dans l'ouverture 35 réalisée dans ladite âme. De telles excroissances peuvent se projeter depuis le bord de plus grande longueur LT de l'ouverture, comme dans l'exemple d'une excroissance 38a de la figure 8, ou depuis un autre bord de l'ouverture, comme dans l'exemple d'une excroissance 38b de la figure 9. Il sera pris soin dans ce cas de préserver un jeu minimum avec les surfaces de matage du cadre comme expliqué supra.

Dans une autre forme de réalisation, la pièce de compression 40 est maintenue par au moins une excroissance de ladite pièce de compression qui s'appuie sur un autre bord de l'ouverture que le bord longitudinal. Une telle excroissance de la pièce de compression peut être réalisée de manière intégrale avec la partie en U, comme dans l'exemple d'une excroissance 48b de la figure 11, ou rapportée sur la partie en U, comme dans l'exemple d'une excroissance 48a de la figure 10.

Toutes ces forme de réalisation permettent d'agencer un matériau de remplissage entre des surfaces en vis à vis de la pièce de compression 40 et du cadre 112 de sorte à éviter des mouvements relatifs non désirés en exploitation normale de l'avion tout en maintenant le jeu souhaité avec les pièces structurales.

Dans une forme de réalisation, les extrémités de la pièce de compression 40 en vis à vis des surfaces de matage 36 sont conformées, par exemple en forme de lames, pour faciliter l'amorçage du découpage de l'âme 31 par ladite pièce de compression.

Dans une forme de réalisation, les extrémités de la pièce de compression 40 en vis à vis des surfaces de matage 36 sont conformées, par exemple par une forme échancrée, pour assurer un guidage relatif de ladite pièce de compression et de l'âme 31 lorsque ladite âme est découpée par ladite pièce de compression en cas de collision de l'avion avec le sol.

Par la mise en oeuvre de l'invention il est obtenu d'une structure d'avion, dont les cadres sont conformés comme il est décrit précédemment, en mesure d'absorber lors d'une collision avec le sol une quantité d'énergie supérieure à ce quelle est en mesure d'absorber par la seule déformation plastique des structures inférieures du fuselage.

En combinant les bénéfices de l'invention avec d'autres techniques connues d'absorption de l'énergie de la collision, il est possible d'atteindre dans ce domaine de l'absorption d'énergie avec des structures en matériaux composites des performances équivalentes, sinon supérieures, à celles des structures métalliques.

Ce résultat est en outre obtenu de manière fiable avec des adaptations mineures à la conception des structures pour lesquelles les méthodes de dimensionnement des pièces en regard des efforts liés à l'exploitation ordinaire de l'avion ne sont pas remises en cause.

L'invention, décrite dans le contexte d'une application à un avion de transport civil conventionnel, peut s'appliquer à tout type de structure pouvant être soumise à des chocs ou collisions plus ou moins intenses aux fins de limiter les accélérations subies lors de ces chocs ou collisions par des personnes, des animaux ou des objets dans ladite structure, ou encore pour protéger l'intégrité d'une partie de ladite structure.

Il est pour cela nécessaire de disposer dans ladite structure de poutres qui sont soumises du fait du choc ou de la collision à des déformations et d'intégrer dans lesdites poutres des ZAE conformes à la description, lesdites ZAE étant agencées dans des parties des poutres soumises à des efforts de compression lors de la collision.

Les poutres en question peuvent être des poutres existant intrinsèquement dans ladite structure et leur conception est alors adaptée, comme dans le cas des cadres de fuselage des avions conventionnels.

Les poutres peuvent également être des éléments spécifiques introduits dans une structure dans le but essentiel d'absorber une énergie liée à un choc ou une collision, par exemple pour former un pare-chocs d'une structure d'un véhicule ou d'une structure fixe. Dans ces cas, il peut être avantageux de mettre en oeuvre l'invention de réaliser ces poutres en matériaux composites afin de bénéficier de réductions de masses qui sont permises avec ces matériaux.

En particulier la structure peut être la structure de tout type d'aéronef : avion, hélicoptère, dirigeable, la structure de véhicules terrestres ou encore de bateaux.

Les poutres concernées peuvent être cintrées ou non et présenter des agencements différents de leurs sections dont de nombreuses formes sont possibles.

Par exemple une poutre avec une âme et deux semelles peut présenter une forme en Z, comme dans l'exemple utilisé pour illustrer l'invention, mais peut présenter une forme en C ou en I.

Le nombre de semelles n'est pas nécessairement égal à deux et le nombre d'âme n'est pas nécessairement égal à un. L'homme du métier n'aura cependant pas de difficulté à appliquer les principes de l'invention dés lors qu'il sera mis en oeuvre une poutre comportant au moins une âme et au moins une semelle.

## Revendications

1. Poutre allongée suivant une direction tangentielle T de ladite poutre, comportant au moins une âme (31) mince et au moins une semelle interne (32) fixée à ladite âme sur un bord longitudinal de ladite âme, **caractérisée en ce que** :
- l'âme (31) comporte au moins une ouverture (35) dont un bord longitudinal de plus grande longueur (LT) est situé au voisinage de l'au moins une semelle interne (32), et sensiblement parallèle à ladite au moins une semelle interne suivant la direction tangentielle T, de sorte à déterminer, dans une zone d'absorption d'énergie (30), une partie fragilisée (321) de ladite au moins une semelle interne non fixée à l'âme, ou fixée à une portion de ladite au moins une âme réduite dans le sens d'une hauteur (H) de ladite poutre, suivant une direction radiale R perpendiculaire à la direction tangentielle T, et ;
- une pièce de compression (40) est fixée à ladite poutre, flottante et sans jeu significatif entre des extrémités de ladite pièce de compression et des surfaces de matage (36) de l'âme (31) sur des bords de l'au moins une ouverture (35) déterminant une longueur du bord longitudinal de plus grande longueur (LT) de ladite ouverture.

2. Poutre suivant la revendication 1 dans laquelle la partie fragilisée (321) est déterminée pour obtenir une rupture en compression de ladite partie fragilisée pour une valeur prédéfinie d'un effort de compression de la semelle interne (32) dans ladite partie fragilisée, ou pour une valeur prédéfinie d'un effort de flexion de ladite poutre dans la zone d'absorption d'énergie produisant un effort de compression de la semelle interne (32).

3. Poutre suivant la revendication 1 ou la revendication 2 dans laquelle le matériau de la pièce de compression (40) est choisi en fonction du matériau de l'âme (31) pour endommager ladite âme au niveau des surfaces de matage (36) lorsque lesdites surfaces de matage s'appuient sur ladite pièce de compression suite à une rupture en compression de la partie fragilisée (321).

4. Poutre suivant l'une des revendications précédentes comportant un renfort (123) modifiant localement des caractéristiques mécaniques en compression de la partie fragilisée (321) sur une partie d'une longueur de ladite partie fragilisée.

5. Poutre suivant l'une des revendications précédentes dans laquelle une zone d'absorption d'énergie est agencée à proximité d'une zone d'introduction d'effort apte à former un point d'appui de ladite poutre favorisant une formation des efforts de compression dans la partie fragilisée (321) lors d'une déformation de ladite poutre donnant naissance à des forces de compression de la semelle interne (32).

6. Poutre suivant l'une des revendications précédentes dans laquelle la partie fragilisée (321) est conçue pour rompre en compression par fracture ou par flambage ou par délamination.

7. Poutre suivant l'une des revendications précédentes dans laquelle un remplissage (42) d'un matériau souple, tel qu'une mousse ou un élastomère, est intercalé entre la pièce de compression (40) et la partie fragilisée (321).

8. Poutre suivant l'une des revendications précédentes dans laquelle l'au moins une ouverture (35) présente une forme globalement triangulaire dont un sommet opposé au bord longitudinal de plus grande longueur (LT) détermine une hauteur (HR) de ladite ouverture suivant la direction radiale R.

9. Poutre suivant l'une des revendications précédentes dans laquelle la pièce de compression (40) a sensiblement la forme d'un tronc de cylindre creux traversé, suivant un axe dudit cylindre creux, par la partie fragilisée (321).

10. Poutre suivant la revendication 9 dans laquelle une structure du tronc de cylindre creux est formée d'une seule pièce, fendue suivant sa longueur et maintenue fermée par au moins une fixation.

11. Poutre suivant la revendication 9 dans laquelle une structure du tronc de cylindre creux est formée d'au moins deux pièces, maintenues assemblées entre elles par des fixations suivant la longueur dudit tronc de cylindre.

12. Poutre suivant l'une des revendications 1 à 8 dans laquelle la pièce de compression (40) présente sensiblement la forme d'un tronc de cylindre ouvert avec une section en forme de U, une partie au moins de la partie fragilisée (321) étant engagée dans l'ouverture dudit tronc de cylindre ouvert en U.

13. Poutre suivant la revendication 12 dans laquelle la pièce de compression (40) est fixée à au moins une excroissance (38a, 38b) de la partie fragilisée (321) du cadre (112) se projetant depuis le bord de plus grande longueur (LT) de l'ouverture (35), ou depuis un autre bord de l'ouverture (35).

14. Poutre suivant la revendication 12 dans laquelle la pièce de compression (40) est fixée à ladite poutre maintenue par au moins une excroissance (48a, 48b) de ladite pièce de compression qui s'appuie sur un autre bord de l'ouverture (35) que le bord longitudinal de plus grande longueur (LT).

15. Poutre suivant l'une des revendications précédentes dans laquelle la pièce de compression (40) comporte à ses extrémités des échancrures dans lesquelles est engagée l'âme (31) lorsque les surfaces de matage (36) sont rapprochées l'une de l'autre.

16. Poutre suivant l'une des revendications précédentes dans laquelle au moins l'âme (31) est réalisée en tout ou partie dans un matériau métallique, au moins dans la zone d'absorption d'énergie.

17. Poutre suivant l'une des revendications 1 à 16 dans laquelle au moins l'âme (31) est réalisée en tout ou partie dans un matériau composite comportant des fibres maintenues dans une matrice organique, au moins dans la zone d'absorption d'énergie.

18. Poutre suivant l'une des revendications précédentes dans laquelle ladite poutre est cintrée.

19. Poutre suivant la revendication 18 constituant un cadre ou une partie de cadre destinée à une structure de fuselage d'aéronef.

20. Dispositif comportant au moins une poutre suivant l'une des revendications 1 à 19 agencée dans le dispositif en un emplacement susceptible d'être soumis à des déformations consécutives à une collision avec un objet mobile ou fixe.

21. Dispositif suivant la revendication 20, **caractérisé en ce que** ledit dispositif est un véhicule.

22. Dispositif suivant la revendication 21, **caractérisé en ce que** le véhicule est un aéronef dans lequel l'au moins une poutre est agencée pour absorber une énergie dans le cas d'une collision avec le sol.
